(19) **Europäisches Patentamt / European Patent Office / Office européen des brevets**

(11) **EP 3 173 978 A1**

(12) # EUROPEAN PATENT APPLICATION

(43) Date of publication:
**31.05.2017 Bulletin 2017/22**

(51) Int Cl.:
**G06K 9/46** (2006.01)      **G06K 9/62** (2006.01)

(21) Application number: **16199678.0**

(22) Date of filing: **18.11.2016**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**MA MD**

(30) Priority: **25.11.2015   CN 201510827753**

(71) Applicant: **Xiaomi Inc.**
**Beijing 100085 (CN)**

(72) Inventors:
• **LONG, Fei**
  **Haidian District,**
  **Beijing 100085 (CN)**
• **CHEN, Zhijun**
  **Haidian District,**
  **Beijing 100085 (CN)**
• **ZHANG, Tao**
  **Haidian District,**
  **Beijing 100085 (CN)**

(74) Representative: **Delumeau, François Guy et al**
**Cabinet Beau de Loménie**
**158, rue de l'Université**
**75340 Paris Cedex 07 (FR)**

(54) **METHOD AND DEVICE FOR CHARACTERISTIC EXTRACTION**

(57)    Method and device for characteristic extraction are provided in the disclosure, which belongs to the technical field of image processing. The method for characteristic extraction may comprise: dividing (102) the image into several blocks, each block comprising several cells; performing (104) sparse signal decomposition for each cell to get a sparse vector corresponding to each cell; extracting (106) a characteristic of Histogram of Oriented Gradient (HOG) of the image according to the sparse vectors.

**FIG.1**

EP 3 173 978 A1

**Description**

**FIELD**

The present disclosure generally relates to image processing, and more particularly to method and device for characteristic extraction.

**BACKGROUND**

The detection and recognition of an image is an important research field in computer vision. The most common way in the technology of the detection and recognition of an image is to extract some feature of an image to detect and recognize the image.

In the related art, an image is detected and recognized by extracting the Histogram of Oriented Gradient (HOG) characteristic of the image. The method to extract the Characteristic of HOG is as below: computing the gradient of each pixel of an image; dividing the image into several cells, each cell including several pixels and every neighboring n cells composing a block; calculating the Histogram of Gradient of all the pixels in each cell, and extracting the Characteristic of HOG of respective blocks according to the Histogram of Gradient of all the cells in the block; and extracting the Characteristic of HOG of the image according to the statistics of the Characteristic of HOG of all the blocks.

There are some defects in the method in the related art. The extraction of the HOG characteristic is directly calculated over the space domain of the image, which causes the detection ratio and accuracy in pattern recognition relatively low.

**SUMMARY**

In view of the fact in related arts, a method and device for characteristic extraction are disclosed in the disclosure. The method is as below:

According to a first aspect of the present disclosure, a method for characteristic extraction is provided, which comprising: dividing the image into several blocks, each block comprising several cells; performing sparse signal decomposition for each cell to get a sparse vector corresponding to each cell; and extracting a characteristic of Histogram of Oriented Gradient (HOG) of the image according to the sparse vectors.

In a particular embodiment, the performing sparse signal decomposition for each cell to get a sparse vector corresponding to each cell comprises: adjusting pixels in each cell to be an n*1-dimensional vector; and performing sparse signal decomposition for the vector in each cell using the following formula to get a corresponding sparse vectors: $\min(x)\ \|x\|_1$ subject to $y = Dx$; wherein, y is the vector of each cell, D is a predefined over-complete dictionary, x is the sparse vector extracted by performing sparse signal decomposition for y under the over-complete dictionary D, and $\|x\|_1$ is the summation of the absolute value of each column of the sparse vector x, wherein each sparse vector is an m*1-dimensional vector, and the over-complete dictionary D is an n*m matrix.

In a particular embodiment, the extracting a characteristic of Histogram of Oriented Gradient (HOG) of the image according to the sparse vectors comprises: calculating gradient magnitude and gradient direction of each cell according to the sparse vector to extract a descriptor of each cell; extracting a characteristic of characteristic of HOG of each block based on statistics of descriptors of respective cells of each block; and extracting a characteristic of HOG of the image based on the statistics of characteristics of HOG of respective blocks of the image.

In a particular embodiment, the extracting a characteristic of HOG of the image based on the statistics of characteristics of HOG of respective blocks of the image comprising: cascading the characteristics of HOG of the respective blocks of the image to be a matrix to get the characteristic of HOG of the image, wherein each column of the matrix is the Characteristic of HOG of a block.

In a particular embodiment, the extracting a characteristic of HOG of the image based on statistics of characteristics of HOG of respective blocks of the image comprising: adjusting the Characteristic of HOG of each block of the image from an initial L*1-dimensional vector to an M*N matrix, wherein each block comprises M*N pixels, and L=M*N; extracting the Characteristic of HOG of the image according to the adjusted Characteristic of HOG of each block a the corresponding position of each block in the image.

In a particular embodiment, the method further comprising: transforming the image to get an image with a predefined size.

According to a second aspect of the present disclosure, a device for characteristic extraction is provided, which comprising: a dividing module, configured to divide the image into several blocks, each block comprising several cells; decomposition module, configured to perform sparse signal decomposition for each cell to get a sparse vector corresponding to each cell; and an extraction module, configured to extract a characteristic of Histogram of Oriented Gradient (HOG) of the image according to the sparse vectors.

In a particular embodiment, the decomposition module comprising: a first adjusting sub-module, configured to adjust pixels in each cell to be an n*1-dimensional vector; and a signal decomposition sub-module, configured to perform sparse signal decomposition for the vectors in each cell using the following formula to get a corresponding sparse vector:

$\min(x) \|x\|_1$ subject to $y = Dx$ ; wherein, y is the vector in each cell, D is a predefined over-complete dictionary, x is the sparse vector extracted by perform sparse signal decomposition for y under the over-complete dictionary D, and $\|x\|_1$ is the summation of the absolute value of each column of the sparse vector x, wherein each sparse vector is an m*1-dimensional vector, and the over-complete dictionary D is an n*m matrix.

In a particular embodiment, the extraction module comprising: a calculation sub-module, configured to calculate gradient magnitude and gradient direction of each cell according to the sparse vector to extract a descriptor of each cell; a first statistics sub-module, configured to obtain a characteristic of HOG of each block based on statistics of descriptors of respective cells of each block; and a second statistics sub-module, configured to obtain a characteristic of HOG of the image based on the statistics of characteristics of HOG of respective blocks of the image.

In a particular embodiment, the second statistics sub-module is configured to cascade the characteristics of HOG of respective blocks of the image to be a matrix to get the Characteristic of HOG of the image, wherein each column of the matrix is the Characteristic of HOG of a block.

In a particular embodiment, the second statistics sub-module comprising: a second adjusting sub-module, configured to adjust the Characteristic of HOG of each block in the image from an initial L*1-dimensional vector to an M*N matrix, wherein each block comprises M*N pixels, and L=M*N; and a characteristic extraction sub-module, configured to extract the Characteristic of HOG of the image according to the adjusted Characteristic of HOG of each block and a corresponding position of each block in the image.

In a particular embodiment, the device further comprising: processing module, configured to transform the image to get an image with a predefined size.

According to a third aspect of the disclosure, a device for characteristic extraction is provided, the device comprising: a processor; a memory, used to store instructions executable by the processor; wherein the processor is configured to: divide an image into several blocks, each block comprising several cells; perform sparse signal decomposition for each cell to get a sparse vector corresponding to each cell; and extract a characteristic of Histogram of Oriented Gradient (HOG) of the image according to the sparse vectors.

The advantages and features of the devices according to the embodiments of the present disclosure are the same with those of the above described method and will not be repeated here.

In a particular embodiment, the steps of the method for characteristic extraction are determined by computer program instructions.

Consequently, according to a fourth aspect, the invention is also directed to a computer program for executing, when this program is executed by a computer, the steps of the method for characteristic extraction.

This program can use any programming language and take the form of source code, object code or a code intermediate between source code and object code, such as a partially compiled form, or any other desirable form.

The invention is also directed to a computer-readable information medium containing instructions of a computer program as described above.

The information medium can be any entity or device capable of storing the program. For example, the support can include storage means such as a ROM, for example a CD ROM or a microelectronic circuit ROM, or magnetic storage means, for example a diskette (floppy disk) or a hard disk.

Alternatively, the information medium can be an integrated circuit in which the program is incorporated, the circuit being adapted to execute the method in question or to be used in its execution.

The technical solution provided in the embodiments of the disclosure may have the following beneficial effects:

by dividing an image into several blocks, each block including several cells; perform sparse signal decomposition for each cell to get a sparse vector corresponding to each cell; and extracting a characteristic of Histogram of Oriented Gradient (HOG) of the image according to the sparse vectors; the problem is solved that the detection ratio and accuracy is relatively low in pattern recognition due to direct calculation of the space domain of the image in the process of characteristic of HOG extracting; the effect is achieved that the detection ratio and accuracy is improved in pattern recognition by extracting the characteristic of HOG in the frequency domain.

It is to be understood that both the foregoing general description and the following detailed description are exemplary only and are not restrictive of the disclosure.

**BRIEF DESCRIPTION OF THE DRAWINGS**

The accompanying drawings, which are incorporated in and constitute a part of this specification, illustrate embodiments consistent with the invention and, together with the description, serve to explain the principles of the invention.

FIG. 1 is a flow chart showing a method for characteristic extraction according to an exemplary embodiment.
FIG. 2A is a flow chart showing a method for characteristic extraction according to another exemplary embodiment.
FIG. 2B is a flow chart showing a method for dividing an image according to an exemplary embodiment.
FIG. 2C is a flow chart showing a method for dividing an image according to another exemplary embodiment.
FIG. 2D is a flow chart showing a method for adjusting pixels of a cell according to an exemplary embodiment.
FIG. 2E is a flow chart showing a method for statistics of Characteristic of HOG in a block according to an exemplary embodiment.
FIG. 3A is a flow chart showing a method for characteristic extraction according to an exemplary embodiment.
FIG. 3B is a flow chart showing a method for statistics of Characteristic of HOG of an image according to an exemplary embodiment.
FIG. 4 is a block diagram showing a device for characteristic extraction according to an exemplary embodiment.
FIG. 5 is a block diagram showing a device for characteristic extraction according to another exemplary embodiment.
FIG. 6 is a block diagram showing sub-modules of a device for characteristic extraction according to an exemplary embodiment.
FIG. 7 is a block diagram showing a device for characteristic extraction according to another exemplary embodiment.

**DETAILED DESCRIPTION**

Reference will now be made in detail to exemplary embodiments, examples of which are illustrated in the accompanying drawings. The following description refers to the accompanying drawings in which same numbers in different drawings represent same or similar elements unless otherwise described. The implementations set forth in the following description of exemplary embodiments do not represent all implementations consistent with the invention. Instead, they are merely examples of devices and methods consistent with aspects related to the invention as recited in the appended claims.

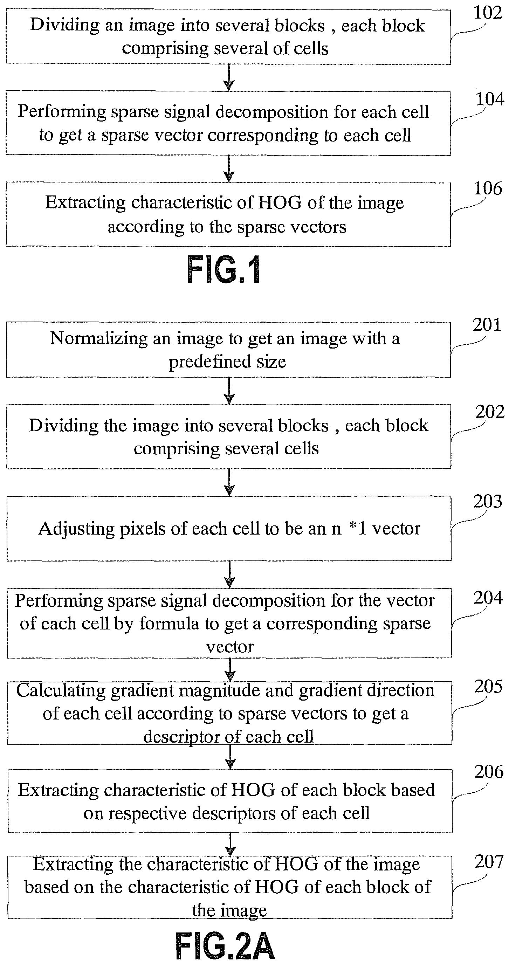

FIG. 1 is a flow chart showing a method for characteristic extraction according to an exemplary embodiment. As shown in FIG. 1, in the embodiment, the method is exemplified to be implemented by pattern recognition hardware, and the method may include the following steps.

In step 102, an image is divided into several blocks, each block including several cells. A cell includes several pixels.

In step 104, sparse signal decomposition is performed for each cell to get a sparse vector corresponding to each cell.

The sparse signal decomposition is used to transform a given observed signal to a sparse vector according to a rule of decomposition, several elements in the sparse vector being zero. In the embodiment, the pixels of each cell serve as a given observed signal so that respective sparse vector of each cell may be obtained.

In step 106, a characteristic of Histogram of Oriented Gradient (HOG) of the image is extracted according to the sparse vectors.

A terminal extracts a characteristic of HOG of an image according to the sparse vectors obtained by the sparse signal decomposition.

In summary, in the method for characteristic extraction provided in the embodiment of the disclosure, by dividing an image into several blocks, each block including several cells; performing sparse signal decomposition for each cell to get a sparse vector corresponding to each cell; extracting the characteristic of Histogram of Oriented Gradient (HOG) of the image according to the sparse vectors; the problem is solved that the detection ratio and accuracy is relatively low in pattern recognition due to direct calculation of the space domain of the image in the process of characteristic of HOG extraction; the effect is achieved that the detection ratio and accuracy is improved in pattern recognition by extracting the characteristic of HOG in the frequency domain.

FIG. 2A is a flow chart showing a method for characteristic extraction according to another exemplary embodiment. As shown in FIG. 2A, in the embodiment. The method is exemplified to be used in the hardware of pattern recognition, and the method includes the following steps.

In step 201, an image is transformed to be an image with a predefined size.

Pattern recognition generally involves characteristic extraction for several images. Before characteristic extraction for an image, for example, a terminal transforms images with different sizes to be images with a predefined size to be handled uniformly.

In step 202, the transformed image is divided into several blocks, each block including several cells.

Alternatively, dividing a transformed image may include: dividing the image into several blocks, and then dividing each block into several cells.

Alternatively, the dividing a transformed image including: dividing the image into several cells, a block being composed of several neighboring cells. For example, a block may be composed of four pairwise adjacent cells shaped like a 2*2 table.

In the process of dividing image in the embodiment, the order of dividing blocks and dividing cells is not specifically limited. The blocks may be divided and then the cells are divided, or the cells may be divided and then the blocks are divided.

In the embodiment, it is not specifically limited whether there is an overlap between the divided blocks of the image. There may be an overlap or there may not be an overlap between the blocks.

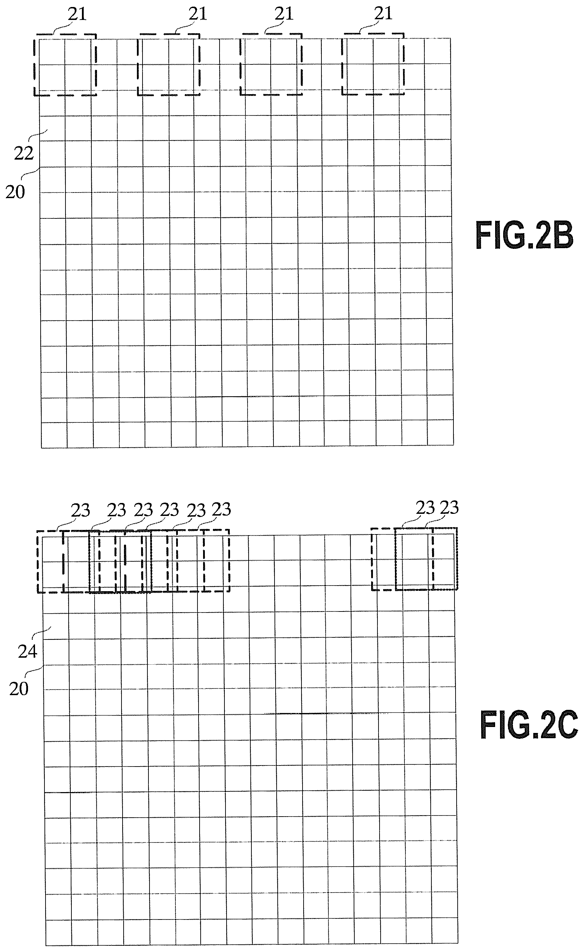

For example, for an image of 128 pixels * 128 pixels, it may be divided into blocks 21 of 16 pixels * 16 pixels firstly, with the blocks not overlapping each other, and then divide each block 21 of 16 pixels * 16 pixels into cells 22 of 8 pixels * 8 pixels, so the image includes 8 * 8=64 blocks which do not overlap each other, and each block includes 2 * 2=4 cells, as shown in FIG. 2B.

For example, for an image of 128 pixels * 128 pixels, it may be divided into blocks 23 of 16 pixels * 16 pixels firstly, with the blocks overlapping each other, and then divide each block 23 of 16 pixels * 16 pixels into cells 24 of 8 pixels * 8 pixels, so the image includes 16 * 16=256 blocks which overlap each other, and each block includes 2 * 2=4 cells, as shown in FIG. 2C.

In step 203, the pixels of each cell are adjusted to be an n*1-dimensional vector.

After the image is divided, the pixels of each cell may be considered as a matrix, and the matrix corresponding to the pixels of each cell is adjusted to be an n*1-dimensional vector.

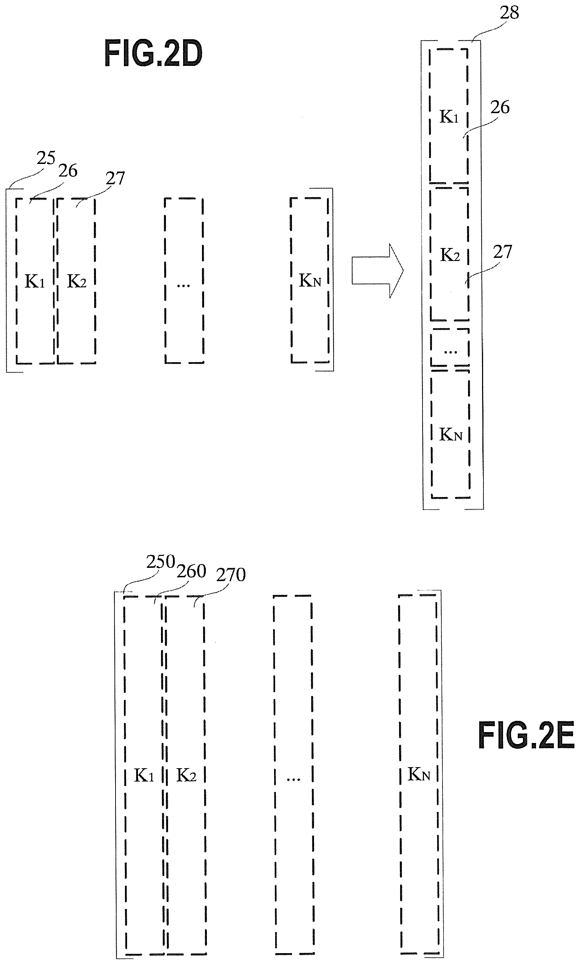

In the process of adjusting the matrix, for example, referring to the FIG. 2D, the second column $K_2$27 in a matrix 25 corresponding to the pixels of a cell is cascaded to be under the first column $K_1$26, and the third column (not shown in the FIG. 2D) in the matrix 25 corresponding to the pixels is cascaded to be under the second column $K_2$27, and so on. The matrix 25 corresponding to the pixels of each cell is adjusted to be an n*1-dimensional vector 28. As shown in FIG. 2D.

In step 204, the vector of each cell is performed sparse signal decomposition for using the following formula to get the corresponding sparse vector:

$$\min(x) \ \|x\|_1 \ \text{subject to} \ \ y = Dx .$$

Wherein, y is the vector of each cell, D is a predefined over-complete dictionary, x is the sparse vector obtained by performing sparse signal decomposition for y under the over-complete dictionary D, and $\|x\|_1$ is the summation of the absolute value of each column of the sparse vector x, wherein each sparse vector is an m*1-dimensional vector, and the over-complete dictionary D is an n*m matrix.

For each cell of an image, the terminal defines the over-complete dictionary D previously, serves the vector of each cell as a given observed signal y, and calculates the sparse vector x for the vector of each cell using the above formula under a predefined over-complete dictionary D. Since the adjusted vector of each cell is of n*1-dimention, and the over-complete dictionary D predefined by the terminal is an n*m matrix, the calculated sparse vector using the above formula corresponding to the vector of each cell is of m*1 dimension.

In step 205, calculate gradient magnitude and gradient direction of each cell according to sparse vector to extract a descriptor of each cell.

The sparse signal decomposed transverse gradient and longitudinal gradient of each pixel of each cell are calculated using gradient operator.

That is, for each element of the sparse vector corresponding to each cell, the transverse gradient and the longitudinal gradient are calculated using the gradient operator.

For example, the common used gradient operators are shown in the following table:

Table 1

| Mask type | Central vector | Non-central vector | Attention correction vector | diagonal | Sobel operator |
|---|---|---|---|---|---|
| operator | [10 -1] | [1 -1] | [180 -8 -1] | $\begin{pmatrix} 0 & 1 \\ -1 & 0 \end{pmatrix}$ $\begin{pmatrix} 1 & 0 \\ 0 & -1 \end{pmatrix}$ | $\begin{pmatrix} 1 & 0 & -1 \\ 2 & 0 & -2 \\ 1 & 0 & 1 \end{pmatrix}$ |

In the embodiment, if the gradient of the pixels of each cell is calculated, any gradient operator in Table 1 may be chosen, or other gradient operator may also be chosen. The choice of gradient operator in the embodiment is not specifically limited.

Assume that the transverse gradient of the element in sparse vector is H(x, y), and the longitudinal gradient is V(x, y), and the gradient direction and gradient magnitude corresponding to an element of the sparse vector may be calculated by formula (1) and (2) as below:

$$\theta(x, y) = \tan^{-1}[V(x, y)/H(x, y)] \qquad (1)$$

$$m(x, y) = [H(x, y)^2 + V(x, y)^2]^{1/2} \qquad (2)$$

Wherein, $\theta(x,y)$ is the gradient direction of element (x, y) in sparse signal, and m(x, y) is the gradient magnitude of element (x, y).

The gradient direction $\theta(x,y)$ is ranged between -90 degrees to 90 degrees. Divide the gradient direction $\theta(x, y)$ evenly into z portions, make statistics for each portion divided in gradient direction according to weight m(x, y) for all the elements in the sparse vector corresponding to each cell, and a z-dimensional vector is extracted for each cell finally, that is, a descriptor corresponding to each cell is extracted.

For example, the gradient direction $\theta(x,y)$ is divided into 9 portions, and the angle corresponding to each portion is 20 degrees. For all the elements in the sparse signal corresponding to each cell, statistics is performed according to weight m(x, y) in all the 20-degrees, and finally, a 9-dimentional vector is extracted corresponding to each cell.

In the embodiment, how many portions the gradient direction is divided into is not specifically limited.

In step 206, statistics is performed for descriptors of all the cells in each block to get a characteristic of HOG of each block.

The terminal performs statistics for the calculated descriptors of the cells included in each block to get a characteristic of HOG of each block.

While performing statistics for the calculated descriptors of the cells of each block, the terminal may cascade the descriptors corresponding to all the cells of each block so that a characteristic of HOG of each block is a vector, whose dimension is k times of the dimension of a descriptor corresponding to a cell included in the block (k is the number of cells included in each block).

For example, the descriptor for each cell is a 9-dimensional vector, and each block includes 4 cells. So the 9-dimensional descriptors in 4 cells are cascaded to be a 36-dimensional vector, which is served as the characteristic of HOG of the corresponding block.

In step 207, statistics is performed for characteristics of HOG of the blocks in the image to get a characteristic of HOG of the image.

The terminal performs statistics of the characteristics of HOG of respective blocks of the image to get the characteristic of HOG of the image. The terminal cascades the characteristics of HOG of respective blocks to be a matrix to get the characteristic of HOG of the image, wherein each column of the matrix is the characteristic of HOG of a block.

For example, the image includes K blocks, and characteristic of HOG of each block is designated as $K_i$, thus $K_i$ characteristics of HOG are cascaded to be a matrix 250. $K_1$ is placed at the first column 260 of the cascaded matrix, and $K_2$ is placed at the second column 270 of the cascaded matrix, and so forth, as shown in FIG. 2E.

In summary, in the method for characteristic extraction in the embodiment of the disclosure, by dividing the image into several blocks, each block including several cells; adjusting the pixels of each cell to be an n*1-dimensional vector; performing sparse signal decomposition for each cell to get a sparse vector using formulas corresponding to each cell; calculating the gradient magnitude and gradient direction of each cell according to the sparse signal to get a descriptor of each cell; performing statistics of descriptors of the cells of each block to get a characteristic of HOG of each block; performing statistics of characteristics of HOG of the blocks to get a characteristic of HOG of the image; the problem is solved that the detection ratio and accuracy is relatively low in pattern recognition due to direct calculation of the space domain of the image in the process of Characteristic of HOG extraction; the effect is achieved that the detection ratio and accuracy is improved in pattern recognition by extracting the characteristic of HOG in the frequency domain.

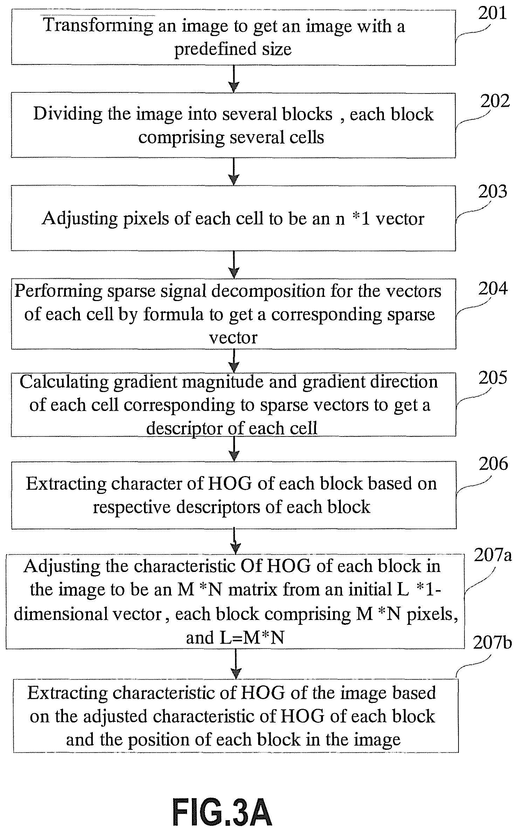

In an alternative embodiment shown in FIG. 2A, in the process of performing statistics of characteristics of HOG of the blocks of the image to get a characteristic of HOG of the image, the steps may be arranged according to the corresponding position in the image. Step 207 may be substituted for step 207a and 207b, as shown in FIG. 3A.

In step 207a, the characteristic of HOG of each block in the image is adjusted to be an M*N matrix from the initial L*1-dimensional vector, each block including M*N pixels, and L=M*N.

The characteristic of HOG of each block is initially an L*1-dimensional vector resulted from the cascading of descriptors corresponding to the cells in each block. The L*1-dimensional vector is adjusted to be an M*N matrix, that is, the L*1-dimensional vector of each block is adjusted to be a corresponding matrix according to the included cells, wherein each column of the corresponding matrix is the descriptor of a cell; and then the descriptors of each cell is adjusted according to the corresponding pixels, wherein each column of the adjusted matrix is the characteristic of HOG corresponding to the pixels of the corresponding column in the corresponding block.

In step 207b, the characteristic of HOG of the image is extracted according to the adjusted characteristic of HOG of each block and a corresponding position of each block in the image.

According to the adjusted characteristic of HOG of each block and the corresponding position of each block in the image, the characteristic of HOG of the position of the corresponding pixel in the image is extracted.

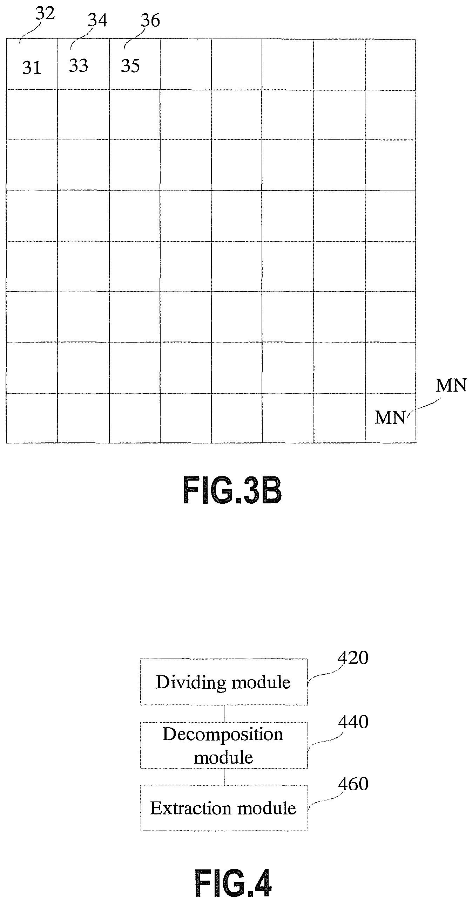

For example, the image includes K blocks, and a characteristic of HOG of a block is designated as $K_i$, so characteristics of HOG $K_i$ is adjusted to be an M*N matrix. The adjusted matrix 31 of $K_1$ is placed at the position in the image corresponding to the first block 32, and the adjusted matrix 33 of $K_2$ is placed at the position in the image corresponding to the second block 34, and so forth. Finally, the matrix MN is placed at the position corresponding to that of the last block MN in the image, as shown in FIG. 3B.

In summary, in the method for characteristic extracting provided in the embodiment, by adjusting the characteristic of HOG of each block in the image from an initial L*1-dimensional vector to an M*N matrix, each block including M*N pixels, and L=M*N; the characteristic of HOG of the image may be extracted according to the adjusted characteristic of HOG of each block and the corresponding position of each block of the image, so as to get the characteristic of HOG of the image; and thus enabling the extracted characteristic of HOG of the image to correspond to the corresponding position of each block in the image, to highlight the characteristic of each block of the image.

The following are the embodiments for the device of the disclosure, which may be used to perform the method as shown in the embodiments of the disclosure. As to the details not shown in the embodiments for the device of the disclosure, please refer to the embodiments for the method of the disclosure.

FIG. 4 is a block diagram showing a device for characteristic extraction according to an exemplary embodiment. As shown in FIG. 4, the device for characteristic extraction includes but not limited to:

a dividing module 420, configured to divide the image into several blocks, each block including several cells. Each cell includes several pixels.

A decomposition module 440, is configured to perform sparse signal decomposition for each cell to get a sparse vector corresponding to each cell.

The sparse signal decomposition is performed to transform a given observed signal to be a sparse vector according to a rule of decomposition, several elements in the sparse vector being zero. In the embodiment, the pixels of each cell serve as the given observed signal so that the respective sparse signal of each cell may be obtained.

A extraction module 460, is configured to extract a characteristic of Histogram of Oriented Gradient (HOG) of the image according to the sparse vectors.

In summary, in the device for characteristic extraction provided in the embodiment of the disclosure, by dividing the image into several blocks, each block including several cells; performing sparse signal decomposition for each cell to get a sparse vector corresponding to each cell; extracting a characteristic of Histogram of Oriented Gradient (HOG) of the image according to the sparse vectors; the problem is solved that the detection ratio and accuracy is relatively low in pattern recognition due to direct calculation of the space domain of the image in the process of characteristic of HOG extraction; the effect is achieved that the detection ratio and accuracy is improved in pattern recognition by extracting the characteristic of HOG in the frequency domain.

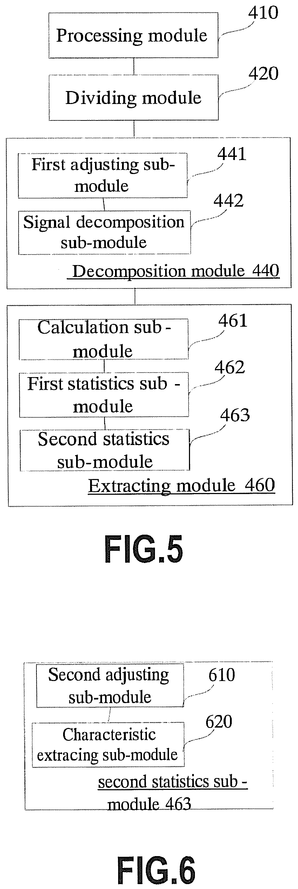

FIG. 5 is a block diagram showing a device for characteristic extraction according to another exemplary embodiment. As shown in FIG. 5, the device for characteristic extraction includes but not limited to:

a processing module 410, configured to transform an image to be an image with a predefined size.

Pattern recognition generally involves extracting characteristic for several images. Before extracting characteristic for an image, processing module 410 transforms images with different sizes to be images with a predefined size to be handled uniformly.

Dividing module 420, is configured to divide the image into several blocks, each block including several cells.

Alternatively, the dividing the normalized image by the dividing module 420 including: dividing the image into several blocks, and then dividing each block into several cells.

Alternatively, the dividing the normalized image by the dividing module 420 including: dividing the image into several cells, and then composing a block by the neighboring cells, each block including several cells. For example, a block may be composed of four pairwise adjacent cells shaped like a 2*2 table.

In the process of dividing image in the embodiment, the order of dividing blocks and dividing cells is not specifically limited. The blocks may be divided and then the cells are divided, or the cells may be divided and then the blocks are divided.

In the embodiment, it is not specifically limited whether there is an overlap between the divided blocks of the image. There may be an overlap or there may not be an overlap between the blocks.

A decomposition module 440, is configured to perform sparse signal decomposition for each cell to get a sparse vector corresponding to each cell.

The sparse signal decomposition is performed to transform a given observed signal to be a sparse vector according to a rule of decomposition, several elements in the sparse vector being zero.

In the embodiment, the decomposition module 440 may include the following sub-modules:

a first adjusting sub-module 441, configured to adjust the pixels in each cell to be an n*1-dimensional vector.

After the image is divided, the pixels in each cell may be considered as a matrix, and the first adjusting sub-module 441 adjusts the matrix corresponding to the pixels in each cell to be an n*1-dimensional vector.

A signal decomposition sub-module 442, is configured to perform sparse signal decomposition for the vector of each cell using the following formula to get a corresponding sparse vector:

$$\min(x) \; \|x\|_1 \; \text{subject to} \; y = Dx .$$

Wherein, y is the vector of each cell, D is a predefined over-complete dictionary, x is the sparse vector extracted by performing sparse signal decomposition for y under the over-complete dictionary D, and $\|x\|_1$ is the summation of the absolute value of each column of the sparse vector x, wherein each sparse vector is an m*1-dimensional vector, and the over-complete dictionary D is an n*m matrix.

For each cell of an image, the terminal defines the over-complete dictionary D previously, serves the vector of each cell as a given observed signal y, and calculates the sparse vector x for the vector of each cell using the above formula under a predefined over-complete dictionary D. Since the adjusted vector of each cell is of n*1-dimention, and the over-complete dictionary D predefined by the terminal is an n*m matrix, the calculated sparse vector using the above formula corresponding to the vector of each cell is of m*1 dimension.

A extracting module 460, is configured to extract a characteristic of Histogram of Oriented Gradient (HOG) of the image according to the sparse vectors.

In the embodiment, the extracting module 460 may include the following sub-modules:

Calculating sub-module 461, configured to calculate gradient magnitude and gradient direction of each cell according to sparse vector to extract a descriptor of each cell.

By using gradient operator, the calculating sub-module 461 calculates the DCT transformed or DFT transformed transverse gradient and longitudinal gradient of each pixel in each cell.

The choice of gradient operator in the embodiment is not specifically limited.

Assume that the transverse gradient of the element in sparse vector is H(x, y), and the longitudinal gradient is V(x, y), and the gradient direction and gradient magnitude corresponding to a pixel may be calculated by formula (1) and (2) as below:

$$\theta(x,y) = \tan^{-1}[V(x,y)/H(x,y)] \qquad (1)$$

$$m(x, y) = [H(x, y)^2 + V(x, y)^2]^{1/2} \qquad (2)$$

Wherein, θ(x, y) is the gradient direction of element (x, y) in sparse signal, and m(x, y) is the gradient magnitude of element (x, y).

The gradient direction θ(x, y) is ranged between -90 degrees to 90 degrees. Divide the gradient direction θ(x, y) evenly into z portions, make statistics for each portion divided in gradient direction according to weight m(x, y) for all the elements of the sparse vector corresponding to each cell, and a z-dimensional vector is extracted for each cell finally, that is, the descriptor corresponding to each cell is extracted.

In the embodiment, how many portions the gradient direction is divided into is not specifically limited.

A first statistics sub-module 462, is configured to perform statistics for descriptors of the cells in each block to get a characteristic of HOG of each block.

The first statistics sub-module 462 performs statistics for the calculated descriptors of the cells included in each block to get a characteristic of HOG of each block.

While performing statistics for the calculated descriptors of the cells of each block, the first statistics sub-module 462 may cascade the descriptors corresponding to all the cells of each block so that the characteristic of HOG of each block is a vector, whose dimension is k times of the dimension of the descriptor corresponding to a cell included in the block.

A second statistics sub-module 463, is configured to perform statistics of characteristics of HOG of respective blocks to get a characteristic of HOG of the image.

The second statistics sub-module 463 performs statistics of the characteristic of HOG of respective blocks in the image to get the characteristic of HOG of the image.

Alternatively, the second statistics sub-module 463 cascades the characteristic of HOG of respective blocks to be a matrix to get the characteristic of HOG of the image, wherein each column of the matrix is a characteristic of HOG of a block.

In summary, in the device for characteristic extraction in the embodiments of the disclosure, by dividing the image into several blocks, each block including several cells; adjusting the pixels in each cell to be an n*1-dimensional vector; performing sparse signal decomposition for each cell using formulas to get a sparse vector corresponding to each cell; calculating the gradient magnitude and gradient direction of each cell according to the sparse signal to get a descriptor of each cell; performing statistics of descriptors of the cells in each block to get a characteristic of HOG of each block; performing statistics of characteristics of HOG of the blocks of the image to get a characteristic of HOG of the image; the problem is solved that the detection ratio and accuracy is relatively low in pattern recognition due to direct calculation of the space domain of the image in the process of characteristic of HOG extraction; the effect is achieved that the detection ratio and accuracy is improved in pattern recognition by extracting the characteristic of HOG in the frequency domain.

In an alternative embodiment shown in FIG. 5, as shown in FIG. 6, the second statistics sub-module 463 may include the following sub-modules.

A second adjusting sub-module 610, is configured to adjust the characteristic of HOG of each block in the image to be an M*N matrix from the initial L*1-dimensional vector, each block including M*N pixels, and L=M*N.

The characteristic of HOG of each block is initially an L*1-dimensional vector resulted from the cascading of the descriptors corresponding to the cells in the block. The adjusting sub-module 610 adjusts the L*1-dimensional vector to be an M*N matrix, that is, the L*1-dimensional vector in each block is adjusted to be a corresponding matrix according to the included cells, wherein each column of the corresponding matrix is the descriptor of a cell; and then the descriptor of each cell is adjusted according to the corresponding pixels, wherein each column of the adjusted matrix is the Characteristic of HOG corresponding to the pixels of the corresponding column in the corresponding block.

Characteristic extraction sub-module 620, is configured to extract the characteristic of HOG of the image according to the adjusted characteristic of HOG of each block and the corresponding position of each block in the image.

Characteristic extraction sub-module 620 extracts the characteristic of HOG of the image according to the adjusted characteristic of HOG of each block and the corresponding position of each block in the image.

In summary, the device for characteristic extracting is provided in the embodiment, by adjusting the characteristic of HOG of each block in the image from an initial L*1-dimensional vector to an M*N matrix, each block including M*N pixels, and L=M*N; the characteristic of HOG of the image may be extracted according to the adjusted characteristic of HOG of each block and the corresponding position of each block in the image, so as to get the characteristic of HOG of the image; and thus enabling the extracted characteristic of HOG of the image to correspond to the corresponding position of each block in the image, to highlight the characteristic of each block in the image.

With respect to the devices in the above embodiments, the specific manners that the respective modules perform operations have been described in detail in the embodiments regarding the relevant methods, and will not be elaborated herein.

In an exemplary embodiment of the disclosure, a device for characteristic extraction is provided, which can implement the method for characteristic extraction provided in the disclosure, the device including: processor; memory, used to store the processor-executable instructions;
wherein the processor is configured to:

divide an image into several blocks, each block including several cells;
perform sparse signal decomposition for each cell to get a sparse vector corresponding to each cell; and
extract a characteristic of Histogram of Oriented Gradient (HOG) of the image according to the sparse vectors.

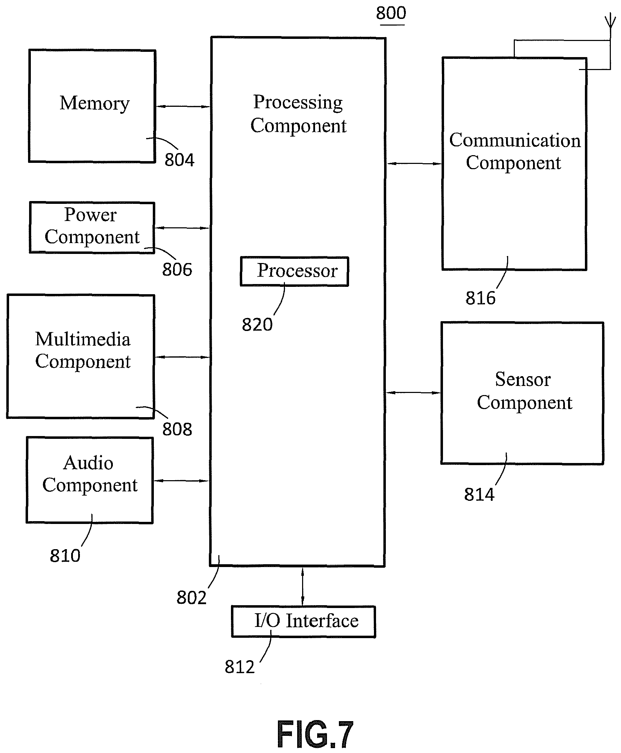

FIG. 7 is a block diagram of a device 700 for uninstalling an application according to an exemplary embodiment. For example, the device 700 may be a mobile phone, a computer, a digital broadcast terminal, a messaging device, a gaming console, a tablet, a medical device, exercise equipment, a personal digital assistant, and the like.

Referring to FIG. 7, the device 700 may include one or more of the following components: a processing component 702, a memory 704, a power component 706, a multimedia component 708, an audio component 710, an input/output (I/O) interface 712, a sensor component 714, and a communication component 716.

The processing component 702 typically controls overall operations of the device 700, such as the operations associated with display, telephone calls, data communications, camera operations, and recording operations. The processing component 702 may include one or more processors 718 to execute instructions to perform all or part of the steps in the above described methods. Moreover, the processing component 702 may include one or more modules which facilitate the interaction between the processing component 702 and other components. For instance, the processing component 702 may include a multimedia module to facilitate the interaction between the multimedia component 708 and the processing component 702.

The memory 704 is configured to store various types of data to support the operation of the device 700. Examples of such data include instructions for any applications or methods operated on the device 700, contact data, phonebook data, messages, pictures, video, etc. The memory 704 may be implemented using any type of volatile or non-volatile memory devices, or a combination thereof, such as a static random access memory (SRAM), an electrically erasable programmable read-only memory (EEPROM), an erasable programmable read-only memory (EPROM), a programmable read-only memory (PROM), a read-only memory (ROM), a magnetic memory, a flash memory, a magnetic or optical disk.

The power component 706 provides power to various components of the device 700. The power component 706 may include a power management system, one or more power sources, and any other components associated with the generation, management, and distribution of power for the device 700.

The multimedia component 708 includes a screen providing an output interface between the device 700 and the user. In some embodiments, the screen may include a liquid crystal display (LCD) and a touch panel (TP). If the screen includes the touch panel, the screen may be implemented as a touch screen to receive input signals from the user. The touch panel includes one or more touch sensors to sense touches, swipes, and gestures on the touch panel. The touch sensors may not only sense a boundary of a touch or swipe action, but also sense a period of time and a pressure associated with the touch or swipe action. In some embodiments, the multimedia component 708 includes a front camera and/or a rear camera. The front camera and the rear camera may receive an external multimedia datum while the device 700 is in an operation mode, such as a photographing mode or a video mode. Each of the front camera and the rear camera may be a fixed optical lens system or have optical focusing and zooming capability.

The audio component 710 is configured to output and/or input audio signals. For example, the audio component 710 includes a microphone ("MIC") configured to receive an external audio signal when the device 700 is in an operation mode, such as a call mode, a recording mode, and a voice recognition mode. The received audio signal may be further stored in the memory 704 or transmitted via the communication component 716. In some embodiments, the audio component 710 further includes a speaker to output audio signals.

The I/O interface 712 provides an interface between the processing component 702 and peripheral interface modules, the peripheral interface modules being, for example, a keyboard, a click wheel, buttons, and the like. The buttons may include, but are not limited to, a home button, a volume button, a starting button, and a locking button.

The sensor component 714 includes one or more sensors to provide status assessments of various aspects of the device 700. For instance, the sensor component 714 may detect an open/closed status of the device 700, relative positioning of components (e.g., the display and the keypad, of the device 700), a change in position of the device 700 or a component of the device 700, a presence or absence of user contact with the device 700, an orientation or an acceleration/deceleration of the device 700, and a change in temperature of the device 700. The sensor component 714 may include a proximity sensor configured to detect the presence of a nearby object without any physical contact. The sensor component 714 may also include a light sensor, such as a CMOS or CCD image sensor, for use in imaging applications. In some embodiments, the sensor component 714 may also include an accelerometer sensor, a gyroscope sensor, a magnetic sensor, a pressure sensor, or a temperature sensor.

The communication component 716 is configured to facilitate communication, wired or wirelessly, between the device 700 and other devices. The device 700 can access a wireless network based on a communication standard, such as WiFi, 2G, or 3G, or a combination thereof. In an exemplary embodiment, the communication component 716 receives a broadcast signal or broadcast associated information from an external broadcast management system via a broadcast channel. In an exemplary embodiment, the communication component 716 further includes a near field communication (NFC) module to facilitate short-range communications. For example, the NFC module may be implemented based on a radio frequency identification (RFID) technology, an infrared data association (IrDA) technology, an ultra-wideband (UWB) technology, a Bluetooth (BT) technology, and other technologies.

In exemplary embodiments, the device 700 may be implemented with one or more application specific integrated circuits (ASICs), digital signal processors (DSPs), digital signal processing devices (DSPDs), programmable logic devices (PLDs), field programmable gate arrays (FPGAs), controllers, micro-controllers, microprocessors, or other electronic components, for performing the above described methods for characteristic extraction.

In exemplary embodiments, there is also provided a non-transitory computer-readable storage medium including instructions, such as included in the memory 704, executable by the processor 718 in the device 700, for performing the above-described methods for characteristic extraction. For example, the non-transitory computer-readable storage medium may be a ROM, a RAM, a CD-ROM, a magnetic tape, a floppy disc, an optical data storage device, and the like.

Other embodiments of the invention will be apparent to those skilled in the art from consideration of the specification and practice of the disclosures herein. This application is intended to cover any variations, uses, or adaptations of the disclosure following the general principles thereof and including such departures from the present disclosure as come within known or customary practice in the art.

**Claims**

1. A method for characteristic extraction, **characterized in** comprising steps of:

   dividing (102) an image into several blocks, each block comprising several cells;
   performing (104) sparse signal decomposition for each cell to get a sparse vector corresponding to each cell; and
   extracting (106) a characteristic of Histogram of Oriented Gradient (HOG) of the image according to the sparse vectors.

2. The method of claim 1, wherein the performing (104) sparse signal decomposition for each cell to get a sparse vector corresponding to each cell comprises:

   adjusting (203) pixels of each cell to be an n*1-dimensional vector; and
   performing (204) sparse signal decomposition for the vector in each cell using the following formula to get a corresponding sparse vectors:

$$\min(x) \ \|x\|_1 \ \text{subject to} \ y = Dx \ ;$$

   wherein, y is the vector of each cell, D is a predefined over-complete dictionary, x is the sparse vector extracted by performing sparse decomposition for y under the over-complete dictionary D, and $\|x\|_1$ is the summation of the absolute value of each column of the sparse vector x, wherein each sparse vector is an m*1-dimensional vector, and the over-complete dictionary D is an n*m matrix.

3. The method of claim 1 or 2, wherein the extracting (106) a characteristic of Histogram of Oriented Gradient (HOG) of the image according to the sparse vectors comprises:

   calculating (205) gradient magnitude and gradient direction of each cell according to the sparse vector to extract a descriptor of each cell;
   extracting (206) a characteristic of HOG of each block based on statistics of descriptors of respective cells of each block; and
   extracting (207) a characteristic of HOG of the image based on statistics of characteristics of HOG of respective blocks of the image.

4. The method of claim 3, wherein the extracting (207) a characteristic of HOG of the image based on the statistics of characteristics of HOG of respective blocks of the image comprises:

cascading the characteristics of HOG of the respective blocks of the image to be a matrix to get the characteristic of HOG of the image, wherein each column of the matrix is the characteristic of HOG of a block.

5. The method of claim 3, wherein the extracting (207) a characteristic of HOG of the image based on statistics of characteristics of HOG of respective blocks of the image comprises:

adjusting (207a) the characteristic of HOG of each block in the image from an initial L*1-dimensional vector to an M*N matrix, wherein each block comprises M*N pixels, and L=M*N; and
extracting (207b) the characteristic of HOG of the image according to the adjusted characteristic of HOG of each block and a corresponding position of each block in the image.

6. The method of any of claims 1-5, wherein the method comprises:

transforming the image to be an image with a predefined size.

7. A device for characteristic extraction, **characterized in** comprising:

a dividing module (420), configured to divide an image into several blocks, each block comprising several cells;
a decomposition module (440), configured to perform sparse signal decomposition for each cell to get a sparse vector corresponding to each cell;
an extraction module (460), configured to extract a characteristic of Histogram of Oriented Gradient (HOG) of the image according to the sparse vectors.

8. The device of claim 7, wherein the decomposition module (440) comprises:

a first adjusting sub-module (441), configured to adjust the pixels in each cell to be an n*1-dimensional vector; and
a signal decomposition sub-module (442), configured to perform sparse signal decomposition for the vector in each cell using the following formula to get a corresponding sparse vectors:

$$\min(x) \ \|x\|_1 \ \text{ subject to } \ y = Dx \ ;$$

wherein, y is the vector of each cell, D is a predefined over-complete dictionary, x is the sparse vector extracted by performing sparse signal decomposition for y under the over-complete dictionary D, and $\|x\|_1$ is the summation of the absolute value of each column of the sparse vector x, wherein each sparse vector is an m*1-dimensional vector, and the over-complete dictionary D is an n*m matrix.

9. The device of claim 7 or 8, wherein the extraction module (460) comprises:

a calculation sub-module (461), configured to calculate gradient magnitude and gradient direction of each cell according to the sparse vector to extract a descriptor of each cell;
a first statistics sub-module (462), configured to extract a characteristic of HOG of each block based on the statistics of descriptors of respective cells of each block; and
a second statistics sub-module (463), configured to extract a characteristic of HOG of the image based on statistics of characteristics of HOG of respective blocks of the image.

10. The device of claim 9, wherein the second statistics sub-module (463) is configured to:

cascade the characteristics of HOG of the respective blocks of the image to be a matrix to get the characteristic of HOG of the image, wherein each column of the matrix is the characteristic of HOG of a block.

11. The device of claim 9, wherein the second statistics sub-module (463) comprises:

a second adjusting sub-module (610), configured to adjust the characteristic of HOG of each block in the image from an initial L*1-dimensional vector to an M*N matrix, wherein each block comprises M*N pixels, and L=M*N; and
a characteristic extraction sub-module (620), configured to extract the characteristic of HOG of the image

12

according to the adjusted characteristic of HOG of each block and a corresponding position of each block in the image.

**12.** The device of any of claims 7-11, wherein the device further comprises:

a processing module, configured to transform the image to be an image with a predefined size.

**13.** A device for characteristic extraction, **characterized in** comprising:

a processor,
a memory, used to store instructions executable by the processor;
wherein, the processor is configured to perform a method according to any of claims 1-6.

**14.** A computer program including instructions for executing the steps of a method according to any of claims 1-6 when said program is executed by a processor.

**15.** A recording medium readable by a computer and having recorded thereon the computer program according to claim 14.

Dividing an image into several blocks , each block comprising several of cells    102

↓

Performing sparse signal decomposition for each cell to get a sparse vector corresponding to each cell    104

↓

Extracting characteristic of HOG of the image according to the sparse vectors    106

## FIG.1

Normalizing an image to get an image with a predefined size    201

↓

Dividing the image into several blocks , each block comprising several cells    202

↓

Adjusting pixels of each cell to be an n *1 vector    203

↓

Performing sparse signal decomposition for the vector of each cell by formula to get a corresponding sparse vector    204

↓

Calculating gradient magnitude and gradient direction of each cell according to sparse vectors to get a descriptor of each cell    205

↓

Extracting characteristic of HOG of each block based on respective descriptors of each cell    206

↓

Extracting the characteristic of HOG of the image based on the characteristic of HOG of each block of the image    207

## FIG.2A

21      21      21      21

22

20

**FIG.2B**

23   23 23 23 23 23      23 23

24

20

**FIG.2C**

# FIG.2D

K₁ K₂ ... Kₙ

⟹

K₁

K₂

...

Kₙ

K₁ K₂ ... Kₙ

# FIG.2E

Transforming an image to get an image with a
predefined size                                    201

Dividing the image into several blocks , each block
comprising several cells                            202

Adjusting pixels of each cell to be an n *1 vector   203

Performing sparse signal decomposition for the vectors
of each cell by formula to get a corresponding sparse
vector                                              204

Calculating gradient magnitude and gradient direction
of each cell corresponding to sparse vectors to get a
descriptor of each cell                             205

Extracting character of HOG of each block based on
respective descriptors of each block               206

Adjusting the characteristic Of HOG of each block in
the image to be an M *N matrix from an initial L *1-
dimensional vector , each block comprising M *N pixels,
and L=M*N                                           207a

Extracting characteristic of HOG of the image based
on the adjusted characteristic of HOG of each block
and the position of each block in the image        207b

# FIG.3A

32  34  36

| 31 | 33 | 35 | | | | | |
|----|----|----|----|----|----|----|----|
|    |    |    |    |    |    |    |    |
|    |    |    |    |    |    |    |    |
|    |    |    |    |    |    |    |    |
|    |    |    |    |    |    |    |    |
|    |    |    |    |    |    |    |    |
|    |    |    |    |    |    |    | MN |

MN

MN

**FIG.3B**

```
┌─────────────────────┐
│   Dividing module    │  420
└─────────────────────┘
          │
┌─────────────────────┐
│    Decomposition     │  440
│       module         │
└─────────────────────┘
          │
┌─────────────────────┐
│  Extraction module   │  460
└─────────────────────┘
```

**FIG.4**

Processing module 410

Dividing module 420

First adjusting sub-module 441

Signal decomposition sub-module 442

Decomposition module 440

Calculation sub-module 461

First statistics sub-module 462

Second statistics sub-module 463

Extracting module 460

## FIG.5

Second adjusting sub-module 610

Characteristic extracing sub-module 620

second statistics sub-module 463

## FIG.6

800

Memory

804

Power
Component

806

Multimedia
Component

808

Audio
Component

810

802

Processing
Component

Processor

820

I/O Interface

812

Communication
Component

816

Sensor
Component

814

## FIG.7

Europäisches
Patentamt

European
Patent Office

Office européen
des brevets

# EUROPEAN SEARCH REPORT

Application Number

EP 16 19 9678

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | BARDEH NARGES GHAEDI ET AL: "New approach for human detection in images using histograms of oriented gradients", 2013 21ST IRANIAN CONFERENCE ON ELECTRICAL ENGINEERING (ICEE), IEEE, 14 May 2013 (2013-05-14), pages 1-4, XP032483163, DOI: 10.1109/IRANIANCEE.2013.6599619 * abstract, 2.1, Figure 1 * | 1-15 | INV. G06K9/46 G06K9/62 |
| A | DALAL N ET AL: "Histograms of oriented gradients for human detection", PROCEEDINGS / 2005 IEEE COMPUTER SOCIETY CONFERENCE ON COMPUTER VISION AND PATTERN RECOGNITION, CVPR 2005 : [20 - 25 JUNE 2005, SAN DIEGO, CA], IEEE, PISCATAWAY, NJ, USA, 25 June 2005 (2005-06-25), pages 886-893vol.1, XP031330347, ISBN: 978-0-7695-2372-9 | 1 | |
| A | CN 104 850 852 A (BEIJING XIAOMI TECHNOLOGY CO) 19 August 2015 (2015-08-19) * the whole document * | 1 | TECHNICAL FIELDS SEARCHED (IPC) G06K |

The present search report has been drawn up for all claims

| Place of search | Date of completion of the search | Examiner |
|---|---|---|
| The Hague | 31 March 2017 | Versluis, Anton |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

## ANNEX TO THE EUROPEAN SEARCH REPORT
## ON EUROPEAN PATENT APPLICATION NO.

EP 16 19 9678

This annex lists the patent family members relating to the patent documents cited in the above-mentioned European search report.
The members are as contained in the European Patent Office EDP file on
The European Patent Office is in no way liable for these particulars which are merely given for the purpose of information.

31-03-2017

| Patent document cited in search report | Publication date | Patent family member(s) | Publication date |
|---|---|---|---|
| CN 104850852 A | 19-08-2015 | NONE | |

For more details about this annex : see Official Journal of the European Patent Office, No. 12/82

EPO FORM P0459